## Europäisches Patentamt
## European Patent Office
## Office européen des brevets

(11) Publication number: **0 165 697**
**B1**

(12)

# EUROPEAN PATENT SPECIFICATION

(45) Date of publication of patent specification: **23.11.88**

(51) Int. Cl.⁴: **G 01 D 5/34, G 01 F 1/32**

(21) Application number: **85303292.8**

(22) Date of filing: **09.05.85**

(54) **Optical sensor arrangements.**

(30) Priority: **21.05.84 US 612284**

(43) Date of publication of application:
**27.12.85 Bulletin 85/52**

(45) Publication of the grant of the patent:
**23.11.88 Bulletin 88/47**

(84) Designated Contracting States:
**DE FR GB IT SE**

(56) References cited:
**DE-A-3 217 078**
**GB-A-2 093 997**

(73) Proprietor: **THE BABCOCK & WILCOX COMPANY**
**1010 Common Street P.O. Box 60035**
**New Orleans Louisiana 70160 (US)**

(72) Inventor: **Thompson, William Lee**
**15364 GAR Highway**
**Montville Ohio 44064 (US)**

(74) Representative: **Cotter, Ivan John et al**
**D. YOUNG & CO. 10 Staple Inn**
**London WC1V 7RD (GB)**

EP 0 165 697 B1

Courier Press, Leamington Spa, England.

## Description

This invention relates to optical sensor arrangements.

Fibre optic vortex shedding flowmeters are known which utilise a fibre that can transmit light and which is connected between a light emitting device and a light detecting device. Bending in the fibre due to the passage of vortices shedded from an obstruction in a flow passage give a measurement of the flow rate.

Two-wire, 4 to 20 mA (milliamperes) control transmitters are known and utilised as a standard mechanism for transmitting signals.

The electronics for a two-wire, 4—20 mA industrial control transmitter has only about 3.5 mA and 10 volts with which to operate. Fibre optic systems presently require several mA for the light emitter, often 200 mA or greater, and as such are not compatible with two-wire, 4—20 mA transmitters.

German Patent Application Publication No. DE—A—3 217 078 discloses an optical sensor arrangement comprising:

light-emitting means;

light-detecting means;

light-connection means connected between the light-emitting means and light-detecting means for varying an attenuation of light from the light-emitting means to the lighht-detecting means according to a variable to be measured;

pulse generator means connected to apply current pulses to the light-emitting means for generating light pulses which are transmitted to the light-detecting means for generating detected pulses; and

sample and hold means having an input connected to the light-detecting means for sampling the detected pulses and for holding a peak value for each plulse at an output of the sample and hold means.

The present invention, according to one aspect thereof, provides an optical sensor arrangement as just defined, characterised in that:

the pulse generator means is operative to apply low-duty cycle, high-current pulses to the light-emitting means whereby the light-emitting means generates low-duty cycle light pulses;

feedback means is connected between said input and said output of the sample and hold means for returning a signal to said input immediately after each low-duty cycle, high-current pulse of the pulse generator means to suppress the light-detecting means after each low-duty cycle, high-current pulse; and

square wave generator means is connected to the sample and hold means for forming a square wave signal corresponding to the variable to be measured.

DE—A—3 217 078 also discloses a method of operating an optical sensor arrangement having a light emitter, a light connection which attenuates light from the said light emitter by a variable amount in accorance with a variable to be measured, and a light detector connected to the light connection, the method comprising:

applying current pulses to the light emitter to generate light pulses;

detecting the light pulses with the light detector to generate detected pulses; and

sampling and holding peak values for the detected pulses during each pulse.

The present invention, according to a second aspect thereof, provides a method as just defined, characterised in that:

the current pulses applied to the light emitter are low-duty cycle, high-current pulses;

a suppressing signal is returned to the light detector immediately after the termination of each low-duty cycle, high-current pulse; and

a square wave is generated using the peak values for the detected pulses, which square wave corresponds to the variable to be measured.

A preferred embodiment of the present invention described hereinbelow enables a two-wire, 4—20 mA industrial control transmitter to be used with a fibre optic vortex shedding flowmeter circuit which would normally not be compatible for such a control transmitter. Pulse mode or low-duty-cycle operation is necessary to utilise a fibre optic sensor in a 4—20 mA transmitter. The preferred embodiment provides a method and circuit to achieve such low-duty-cycle operation and the associated techniques to make it suitable for use in a two-wire, 4—20 mA vortex shedding flowmeter transmitter. It is, however, to be noted that the invention has more general applicability in that the preferred embodiment (and other embodiments) can be used in other applications than detecting bending of an optical fibre or other light-connection means caused by vortices generated in a vortex shedding flowmeter.

In the preferred embodiment a microbend sensor or other sensor with variable light attenuation controlled by a process variable being measured may be used. The microbend sensor modulates the received light by only a small amount, which is on the order of 2 percent maximum. The electronics must make this small change into a full-scale output. This is accomplished, as described in more detail hereinbelow, by bucking the signal from the light detector and amplifying it. The bucking is controlled by a feedback circuit so that the average height of the peaks of the pulsed light signal are controlled to a fixed level. This control has a long time-constant so that rapid changes in the signal, the vortex shedding frequencies, are passed. These frequencies are demodulated from the pulse signals by sample and hold circuits and used to control the 4—20 mA output. Power is gated to a preamplifier (preamp) circuit to save power. The preamplifier uses a programmable current operational amplifier (opamp). High current operation is necessary to amplify the fast pulses from the fibre optics. However, the low current mode is adequate during the off period of the sampling. Gating the current to the preamplifier in conjunction with the optic system pulse results in a significant power saving.

The preferred embodiment provides an electronic circuit for an optical sensor which is simple in design, rugged in construction and economical to manufacture.

The invention will now be further described, by way of illustrative and non-limiting example, with reference to the accompanying drawings, in which:

Figure 1A is a schematic diagram showing part of a preferred optical sensor arrangement or circuit embodying the invention;

Figure 1B shows the remainder of the circuit shown in Figure 1A;

Figure 2 is a graph showing low-duty cycle, high-current pulses applied to a light-emitting diode (LED) in the optical sensor arrangement;

Figure 3 is a graph showing the output of a preamplifier connected to a light detector associated with the light-emitting diode;

Figure 4 is a graph showing the output of a sample and hold circuit portion connected to the preamplifier; and

Figure 5 is a graph, with a portion shown on an enlarged scale, illustrating a detected current.

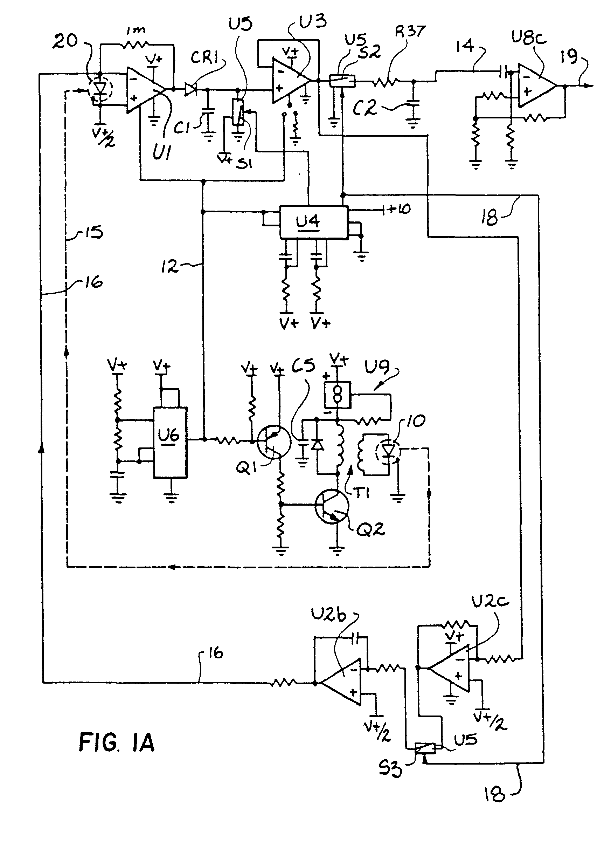

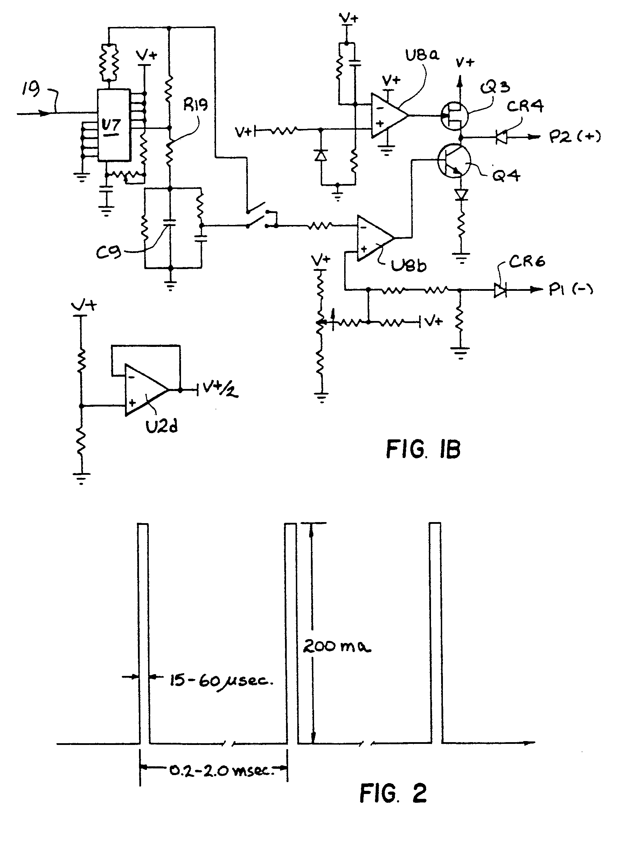

Figures 1A and 1B are schematic diagrams of electronics constituting a preferred optical sensor arrangement or circuit embodying the invention and suitable for readout of a fibre optic microbend sensor as used in a vortex shedding flowmeter.

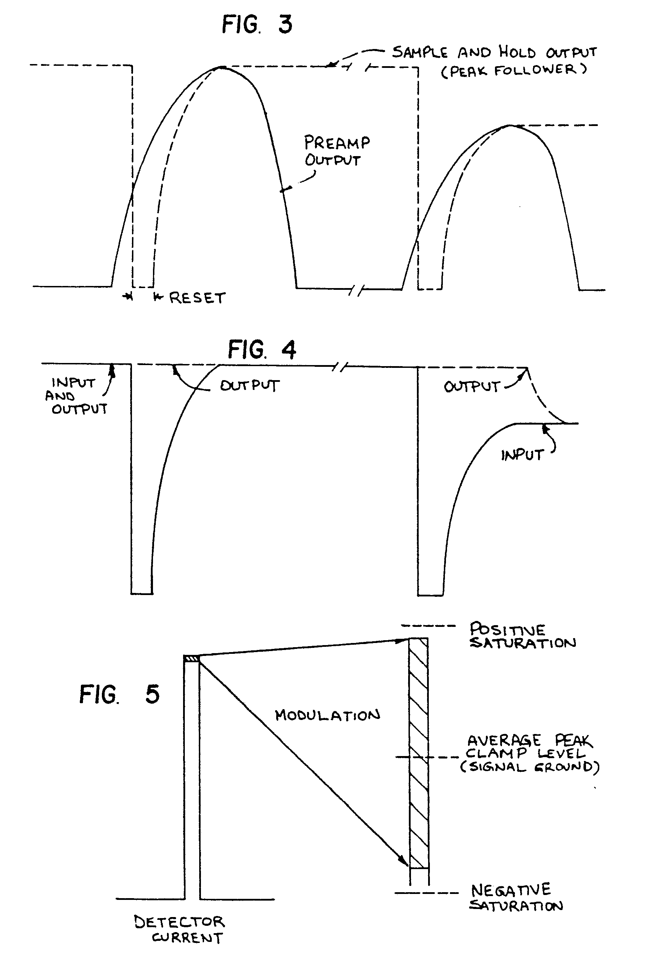

Current is supplied to a light emitting diode (LED) 10 as a series of pulses, typically having a duty cycle of 1 to 2 percent, an amplitude of 200 mA and a repetition rate or frequency of 500 to 5000 Hz. An oscillator, U6, typically a low-power CMOS version of a 555 timer such as a 7555, is used to generate a control signal for the LED current. Transistors Q1 and Q2 amplify the output of the oscillator U6. A transformer T1 serves to match the drive requirement of 1.5 volts for the LED 10 to the circuit's higher drive voltage of typically 6 to 10 volts. The transformer T1 is typically a pulse transformer with a 4:1 turns ratio. A current regulator U9 and a capacitor C5 serve to isolate the high pulses of current from creating voltage pulses on the power supply for the rest of the transmitter circuit by limiting the peak current to around 1 mA and storing charge in the capacitor between the pulses supplied to the LED 10. Then, the current supplied to the LED 10 comes primarily from the charge stored in the capacitor C5. Figure 2 shows the waveform of the current supplied to the LED 10.

Light pulses are transmitted from the LED 10 to a light detector 20 by a fibre optic cable shown schematically at 15. Varying attenuation is effected, typically by application of bending to the fibre 15 or changing of coupling at a discontinuity in the fibre. The light detector 20 converts the received light into an electrical signal, typically a current. In the form of implementation shown in Figure 1A, the detector 20 supplies a current (in pulse form) to the following circuitry.

A preamplifier (preamp) U1 converts the current pulses from the detector 20 into voltage pulses. The integrated circuit used for the preamplifier U1 must be capable of low power operation and have sufficient bandwidth to amplify the pulses faithfully. A type T1C251 integrated circuit available from Texas Instruments is a programmable CMOS operational amplifier (opamp) which meets these requirements. In a low-current mode thereof it meets the power requirements. A high-current mode thereof has the bandwidth necessary for amplifying the pulses. The amplifier U1 is switched into the high power and high bandwidth mode only when a pulse is present, being controlled by the drive signal to the LED 10 via a line 12. Thus, it is not drawing the high power during periods when such is not necessary to the circuit's operation.

A peak-following sample and hold function is performed by the combination of a capacitor C1, a diode CR1 and a switch S1 (which is part of a switch circuit assembly U5 which may be a type 4066 circuit). The switch S1 discharges the voltage on the capacitor C1 at the beginning of the light pulse. The switch S1 is controlled by a one-shot multivibrator circuit in an integrated circuit U4 (MC14538 or MC14528) which is triggered by the beginning of the pulse to the LED 10 over the line 12. Then, the capacitor C1 is charged through the diode CR1 from the output of the preamplifier U1. The capacitor C1 stops charging at the peak of the output of the preamplifier and the diode CR1 prevents the immediate discharge necessary to follow the downside of the pulse. Figure 3 shows this operation. An operational amplifier U3 buffers the voltage on the capacitor C1, allowing the following circuitry to operate without affecting the signal on the capacitor C1.

A second sample and hold operation is performed by a switch S2 (also part of the switch circuit assembly U5), a resistor R37, and a capacitor C2. The switch S2 is closed after the LED pulse has finished. The peak of the pulse as stored in the capacitor C1 is sampled and stored in the capacitor C2. The resistor R37 and capacitor C2 perform a low-pass filtering action to reduce the sampling frequency (LED pulse frequency) component from the signal received from the optical system. Figure 4 shows the output of this circuit, which is on a line 14.

Operational amplifiers U2b and U2c form a feedback control loop, which loop compares the peaks of the pulses with signal ground and returns a current to the input of the preamplifier U1 over a line 16 to drive the peaks back to ground. This is necessary since the pulses are quite large, being sufficient to drive the preamplifier U1 into saturation.

Figure 5 shows the signal and the typically 2 percent maximum modulation. The effect of this circuit on the signal is shown also. The operational amplifier U2b is an integrator (or low pass filter) so that the adjustment effect is slow-acting. Thus, long term variations are removed and signal components are not affected. A switch S3 controls the operation of this loop so that it only operates immediately following the end of the pulse to the LED 10 by a line 18. This removes any influences from decay on the voltage of the capacitor C1 between signal pulses.

An internal power supply is regulated by a circuit U8a and associated components, including a transistor Q3, which is a series pass field effect transistor (FET). An operational amplifier U2d divides the internal power supply, typically 10 volts, into two 5-volt supplies with signal ground in the middle. This allows for operation of amplifiers that have voltage swing and below signal ground.

The typically low level sine wave signal on the line 14 from the second sample and hold arrangement is operated on by a hysteresis comparator U8c, which converts it to a rectangular or square wave. This rectangular or square wave is used to trigger a one-shot multivibrator U7 to give a fixed length, fixed amplitude pulse for each cycle of the sine wave signal from the optical system. This is then averaged by a resistor R19 and a capacitor C9 and used to control a 4—40 mA output signal by a circuit comprising an operational amplifier U8b, a transistor Q4 and associated resistors. The multivibrator U7 may be an MC14538, and is connected to the hysteresis comparator U8c by a line 19.

A two-wire 4—20 mA output thus is obtained at points P2 and P1 from diodes CR4 and CR6, respectively.

**Claims**

1. An optical sensor arrangement comprising:
light-emitting means (10);
light-detecting means (20);
light-connection means (15) connected between the light-emitting means (10) and light-detecting means (20) for varying an attenuation of light from the light-emitting means to the light-detecting means according to a variable to be measured;
pulse generator means (U6 etc.) connected to apply current pulses to the light-emitting means (10) for generating light pulses which are transmitted to the light-detecting means (20) for generating detected pulses; and
sample and hold means (U1, CR1, C1, S1, U3, S2, R37, C2) having an input connected to the light-detecting means (20) for sampling the detected pulses and for holding a peak value for each pulse as an output of the sample and hold means;
characterized in that:
the pulse generator means (U6 etc.) is operative to apply low-duty cycle, high-current pulses to the light-emitting means (10) whereby the light-emitting means generates low-duty cycle light pulses;
feedback means (U2b, U2c) is connected between said input and said output of the sample and hold means (U1, CR1, C1, S1, U3, S2, R37, C2) for returning a signal to said input immediately after each low-duty cycle, high-current pulse of the pulse generator means (U6) to suppress the light-detecting means (20) after each low-duty cycle, high-current pulse; and
square wave generator means (U8c) is connected to the sample and hold means (U1, CR1, C1, S1, U3, S2, R37, C2) for forming a square wave signal corresponding to the variable to be measured.

2. An arrangement according to claim 1, wherein the sample and hold means (U1, CR1, C1, S1, U3, S2, R37, C2) includes an amplifier (U1) — hereinafter referred to as the first amplifier — having an input forming said input of the sample and hold means, the amplifier (U1) having a first high-power, high-bandwidth position and a second low-power low-bandwidth position, the pulse generator means (U6) being connected to the amplifier (U1) for switching the amplifier to its first position only when one of the low-duty cycle, high-current pulses is present and for switching the amplifier to its second position at all other times.

3. An arrangement according to claim 2, including switching means (U5, U4) having an input connected to the pulse generator means (U6) and an output connected to the sample and hold means (U1, CR1, C1, S1, U3, S2, R37, C2) for controlling the sample and hold means to obtain a peak value for each detected pulse during each low-duty cycle, high-current pulse and for applying a signal to the square wave generator means (U8c) immediately after each low-duty cycle, high-current pulse.

4. An arrangement according to claim 3, wherein switching means (U5, U4) is connected to the feedback means (U2b, U2c) for returning the singal immediately after each low-duty cycle, high-current pulse.

5. An arrangement according to claim 4, wherein the sample and hold means (U1, CR1, C1, S1, U3, S2, R37, C2) includes a first sample and hold circuit including a capacitor (C1) for being charged by an output of the amplifier (U1) and a first switch (S1) connected to the capacitor (C1) for grounding the capacitor to remove its charge immediately before each low-duty cycle, high-current pulse of the pulse generator means (U6), the first switch (S1) forming a portion of the switching means (U5, U4), and a second sample and hold circuit including a second switch (S2), a second amplifier (U3) having an input connected to the first capacitor (C1) and an output connected to the second switch (S2), and a second capacitor (C2) connected to the second switch (S2), the second switch (S2) forming a portion of the switching means (U5, U4) and being closed after each low-duty cycle, high-current pulse for charging the second capacitor (C2).

6. An arrangement according to claim 5, wherein the feedback means (U2b, U2c) comprises a third amplifier (U2c) connected to the output of the second amplifier (U3), a third switch (S3) connected to an output of the third amplifier (U2c), an integrating amplifier (U2b) having an input connected to the third switch (S3) and an output connected to the input of the first amplifier (U1), the third switch (S3) forming a portion of the switching means (U5, U4) and being closed immediately after each low-duty cycle, high-current pulse of the pulse generator means (U6).

7. A method of operating an optical sensor arrangement having a light emitter (10), a light connection (15) which attenuates light from the said light emitter (10) by a variable amount in accordance with a variable to be measured, and a light detector (20) connected to the light connection (15), the method comprising:

applying current pulses to the light emitter (10) to generate light pulses;

detecting the light pulses with the light detector (20) to generate detected pulses; and

sampling and holding peak values for the detected pulses during each pulse;
characterised in that:

the current pulses applied to the light emitter (10) are low-duty cycle, high-current pulses;

a suppressing signal is returned to the light detector (20) immediately after the termination of each low-duty cycle, high-current pulse; and

a square wave is generated using the peak values for the detected pulses, which square wave corresponds to the variable to be measured.

8. A method according to claim 7, including amplifying the detected pulses during each low-duty cycle, high-current pulse using a high power and high bandwidth amplifier (U1) and, at all times, amplifying the detected pulse using a low power low bandwidth amplifier (U1).

**Patentansprüche**

1. Optische Sensoranordnung mit:
Lichtemittermitteln (10);
Lichtdetektormitteln (20);
Lichtverbindungsmitteln (50), die zwischen den Lichtemittermitteln (10) und Lichtdetektormitteln (20) verbunden sind zur Veränderung einer Schwächung des Lichtes aus den Lichtemittermitteln zu den Lichtdetektormitteln gemäß einer zu messenden Variablen;
Impulsgeneratormitteln (U6 usw.), die verbunden sind, um Stromimpulse auf die Lichtemittermittel (10) aufzubrigen zur Erzeugung von Lichtimpulsen, die zu dem Lichtdetektormittel (20) übertragen werden zur Erzeugung erfaßter Impulse; und
Abfrage- und Speichermitteln (U1, CR1, C1, S1, U3, S2, R37, C2), deren Eingang mit den Lichtdetektormitteln (20) verbunden ist zum Abtasten der erfaßten Impulse und Speichern eines Spitzenwertes für jeden Impuls am Ausgang der Abfrage- und Speichermittel;
dadurch gekennziechnet, daß:
das Impulsgeneratormittel (U6 usw.) betreibbar ist, um Hochstromimpulse mit kleiner Impulsdauer auf das Lichemittermittel (10) aufzubringen, wodurch das Lichtemittermittel Lichtimpulse mit kleiner Impulsdauer erzeugt;
ein Rückkopplungsmittel (U2b, U2c) zwischen dem Eingang und dem Ausgang des Abfrage- und Speichermittels (U1, CR1, C1, S1, U3, S2, R37, C2) verbunden ist für die Rückführung eines Signals zu dem Eingang unmittelbar nach jedem Hochstromimpuls it kurzer Impulsdauer des Impulsgeneratormittels (U6), um das Lichtdetektormittel (20) nach jedem Hochstromimpuls mit kleiner Impulsdauer zu sperren; und

ein Rechteckwellengeratormittel (U8c) mit dem Abfrageund Speichermittel (U1, CR1, C1, S1, S2, R37, C2) verbunden ist zur Bildung eines Rechteckwellensignals entsprechend der zu messenden Variablen.

2. Anordnung nach Anspurch 1, wobei das Abfrage- und Speichermittel (U1, CR1, C1, S1, U3, S2, R37, C2) einen Verstärker (U1) aufweist — nachfolgend der erste Verstärker genannt — mit einem Eingang, welcher den Eingang des Abfrage- und Speichermittels bildet, wobei der Verstärker (U1) eine erste Hochleistungs-Hochbandbreitenposition und eine zweite Niederleistungs-Niederbandbreitenposition hat, das Pulsgeneratormittel (U6) mit dem Verstärker (U1) verbunden ist zum Schalten des Verstärkers in seine erste Position nur dann, wenn einer der Hochstrompulse mit kleiner Impulsdauer zugegen ist, und zum Schalten des Verstärkers in seine zweite Position zu allen anderen Zeiten.

3. Anordnung nach Anspurch 2 mit Schaltmitteln (U5, U4), deren Eingang mit dem Pulsgeneratormittel (U6) verbunden ist und deren Ausgang mit dem Abfrage- und Speichermittel (U1, CR1, C1, S1, U3, S2, R37, C2) verbunden ist zur Steuerung des Abfrage- und Speichermittels zum Erhalten eines Spitzenwertes für jeden erfaßten Puls während jedes Hochstrompulses mit kleiner Impulsdauer und zum Aufbringen eines Signals auf das Rechteckwellengeneratormittel (U8c) unmittelbar nach jedem Hochstrompuls mit kleiner Impulsdauer.

4. Anordnung nach Anspruch 3, wobei das Schaltmittel (U5, U4) mit dem Rückkopplungsmittel (U2b, U2c) verbunden ist zur Rückführung des Signals unmittelbar nach jedem Hochstrompuls mit kleiner Impulsdauer.

5. Anordnung nach Anspruch 4, wobei das Abfrage- und Speichermittel (U1, CR1, C1, S1, U3, S2, R37, C2) eine erste Abfrage- und Speicherschaltung aufweist mit einem Kondensator (C1) zum Laden durch einen Ausgang des Verstärkers (U1) und einem ersten Schalter (S1), der mit dem Kondensator (C1) verbunden ist zum Erden des Kondensators und Entfernen seiner Ladung unmittelbar vor jedem Hochstrompuls mit kleiner Impulsdauer des Pulsgeneratormittels (U6), wobei der erste Schalter (S1) einen Teil des Schaltmittels (U5, U4) bildet, und eine zweite Abfrage- und Speicherschaltung mit einem zweiten Schalter (S2), einem zweiten Verstärker (U3), dessen Eingang mit dem ersten Kondensator (C1) verbunden ist und dessen Ausgang mit dem zweiten Schalter (S2) verbunden ist, und mit einem zweiten Kondensator (C2), der mit dem zweiten Schalter (S2) verbuden ist, wobei der zweite Schalter (S2) einen Teil des Schaltmittels (U5, U4) bildet und für das Laden des zweiten Kondensators (C2) nach jedem Hochstrompuls mit kleiner Impulsdauer geschlossen wird.

6. Anordnung nach Anspruch 5, wobei das Rückkopplungsmittel (U2b, U2c) einen dritten Verstärker (U2c) aufweist, der mit dem Ausgang des zweiten Verstärkers (U3) verbunden ist, einen dritten Schalter (S3) aufweist, der mit einem Ausgang des dritten Verstärkers (U2c) verbunden ist, einen Integrierverstärker (U2b) aufweist, dessen Eingang mit dem dritten Schalter (S3) verbunden ist und dessen Ausgang mit dem Eingang des ersten Verstärkers (U1) verbunden ist, wobei der dritte Schalter (S3) einen Teil des Schaltmittels (U5, U4) bildet und unmittelbar nach jedem Hochstrompuls mit kleiner Impulsdauer des Pulsgeneratormittels (U6) geschlossen wird.

7. Verfahren für das Betreiben einer optischen Sensoranordnung mit einem Lichtemitter (10), einer Lichtverbindung (15), welche Licht aus dem Lichtemitter (10) um einen variablen Betrag gemäß einer zu messenden Variablen schwächt, und mit einem Lictdetektor (20), der mit dem Lichtverbinder (15) verbunden ist, wobei das Verfahren aufweist:

Aufbringen von Strompulsen auf den Lichtemitter (10) zur Erzeugung von Lichtimpulsen;

Erzeugung von Lichtimpulsen;

Erfassen der Lichtimpulse mit dem Lichtdetektor (20) zur Erzeugung von erfaßten Impulsen; und

Abtasten und Speichern von Spitzenwerten für die erfaßten Impulse während jedes Impulses; dandurch gekennzeichnet, daß:

die Strompulse, die auf den Lichtemitter (10) aufgebracht werden, Hochstrompulse mit kleiner Impulsdauer sind;

ein Sperrsignal zum Lichtdetektor (20) unmittelbar nach der Beendigung jedes Hochstrompulses mit kleiner Impulsdauer zurückgeführt wird; und

eine Rechteckwelle erzeugt wird unter Verwendung der Spitzenwerte für die erfaßten Impulse, wobei die Rechteckwelle der zu messenden Variablen entspricht.

8. Verfahren nach Anspruch 7, mit dem Verstärken der erfaßten Impulse während jedes Hochstrompulses mit kleiner Impulsdauer unter Verwendung eines Hochleistungs- und Hochbandbreitenverstärkes (U1) und zu allen anderen Zeiten Verstärken des erfaßten Impulses unter Verwendung eines Niederleistungs-Niederbandbreitenverstärkers (U1).

**Revendications**

1. Un dispositif capteur optique comprenant:
un moyen émetteur de lumière (10);
un moyen détecteur de lumière (20);
un moyen de connexion de lumière (15) connecté entre le moyen émetteur de lumière (10) et le moyen détecteur de lumière (20) afin de provoquer la variation d'une atténuation de lumière provenant du moyen émetteur de lumière vers le moyen détecteur de lumière en fonction d'une variable à mesurer;
un moyen générateur d'impulsions (U6 etc.) connecté pour appliquer des impulsions de courant au moyen émetteur de lumière (10) afin d'engendrer qui impulsions de lumière qui sont transmises au moyen détecteur de lumière (20) pour engendrer des impulsions détectées; et

un moyen d'échantillonnage et de maintien (U1, CR1, C1, S1, U3, S2, R37, C2) possédant une entrée connectée au moyen détecteur de lumière (20) pour échantillonner les impulsions détectées et pour maintenir une valeur de crête pour chaque impulsion à une sortie du moyen d'échantillonnage et de maintien;
caractérisé en ce que:

le moyen générateur d'impulsions (U6 etc.) remplit la fonction d'appliquer des impulsions de courant élevé, à faible taux de travail au moyen émetteur de lumière (10) grâce à quoi le moyen émetteur de lumière engendre des impulsions à faible taux de travail;

un moyen de rétro-action (U2b, U2c) est connecté entre ladite entrée et ladite sortie du moyen d'échantillonnage et de maintien (U1, CR1, C1, S1, U3, S2, R37, C2) pour renvoyer un signal à ladite entrée immédiatement après chaque impulsion de courant élevé, à faible taux de travail du moyen générateur d'impulsions (U6) pour supprimer le moyen détecteur de lumière (20) après chaque impulsion de courant élevé, à faible taux de travil; et

un moyen générateur d'onde carrée (U8c) est connecté au moyen d'échantillonnage et de maintien (U1, CR1, C1, S1, U3, S2, R37, C2) pour former un signal d'onde carrée correspondant à la variable à mesurer.

2. Un dispositif selon la revendication 1, dans lequel le moyen d'échantillonnage et de maintien (U1, CR1, C1, S1, U3, S2, R37, C2) comprend un amplificateur (U1) — ci-après désigné comme le premier amplificateur — comportant un entrée formant ladite entrée du moyen d'échantillonnage et de maintien, l'amplificateur (U1) comportant une première position de forte puissance, de forte largeur de bande et une seconde position de faible puissance, de faible largeur de bande, le moyen générateur d'impulsions (U6) étant connecté à l'amplificateur (U1) pour commuter l'amplificateur à sa première position seulement lorsque l'une des impulsions de courant élevé, à faible taux de travail est présente et pour commuter l'amplificateur à sa seconde position à tous les autres instants.

3. Un dispositif selon la revendication 2, comprenant un moyen de commutation (U5, U4) comportant une entrée connectée au moyen générateur d'impulsions (U6) et une sortie connectée au moyen d'échantillonnage et de maintien (U1, CR1, C1, S1, U3, S2, R37, C2) pour commander le moyen d'échantillonnage et de maintien pour obtenir une valeur de crête pour chaque impulsion détectée pendant chaque cycle de courant élevé, à faible taux de travail et pour appliquer un signal au moyen générateur d'ondes carrées (U8c) immédiatement après chaque cycle de courant élevé, à faible taux de travail.

4. Un dispositif selon la revendication 3, dans lequel le moyen commutation (U5, U4) est connecté au moyen de rétro-action (U2b, U2c) pour renvoyer le signal immédiatement après chaque impulsion de courant élevé, à faible taux de travail.

5. Un dispositif selon la revendication 4, dans lequel le moyen d'échantillonnage et de maintien (U1, CR1, C1, S1, U3, S2, R37, C2) comprend une premier circuit d'échantillonnage et de maintien comprenant un condensateur (C1) destiné à être chargé par une sortie de l'amplificateur (U1) et un premier commutateur (S1) connecté au condensateur (C1) pour relier à la masse le condensateur pour lui enlever sa charge immédiatement avant chaque impulsion de courant élevé, à faible taux de travail du moyen générateur d'impulsions (U6), le premier commutateur (S1) formant une partie du moyen de commutation (U5, U4) et un second moyen d'échantillonnage et de maintien comprenant une second commutateur (S2), un second amplificateur (U3) comportant une entrée reliée au premier condensateur (C1) et une sortie reliée au second commutateur (S2), et un second condensateur (C2) relié au second commutateur (S2), le second commutateur (S2) formant une partie du moyen de commutation (U5, U4) et étant fermé après chaque impulsion de courant élevé, à faible taux de travail pour charger le second condensateur (C2).

6. Un dispositif selon la revendication 5, dans lequel le moyen de rétro-action (U2b, U2c) comprend un troisième amplificateur (U2c) relié à la sortie du second amplificateur (U3), un troisième commutateur (S3) relié à une sortie du troisème amplificateur (U2c), un amplificateur intégrateur (U2b) comportant une entrée reliée au troisième commutateur (S3) et une sortie reliée à l'entrée du premier amplificateur (U1), le troisième commutateur (S3) formant une partie du moyen de commutation (U5, U4) et étant fermé immédiatement après chaque impulsion de courant élevé, à faible taux de travail du moyen générateur d'impulsions (U6).

7. Un procédé de mise en oeuvre d'un dispositif capteur optique comportant un émetteur de lumière (10), une connexion de lumière (15) qui atténue la lumière venant dudit émetteur de lumière (10) dans une mesure variable en fonction d'une variable à mesurer, et un détecteur de lumière (20) connecté à la connexion de lumière (15), le procédé comprenant:

l'application d'impulsions de courant à l'émetteur de lumière (10) pour engendrer des impulsions lumineuses;

la détection des impulsions lumineuses au moyen du détecteur de lumière (20) pour engendrer des impulsions détectées; et

l'échantillonnage et le maintien des valeurs de crête pour les impulsions détectées pendant chaque impulsion,
caractérisé ce que:

les impulsions de courant appliquées à l'èmetteur de lumière (10) sont des impulsions de courant élevé, à faible taux de travail;

un signal de supression est renvoyé au détecteur de lumière (20) immédiatement après l'achèvement de chaque impulsion de courant élevé, à faible taux de travail; et

un onde carrée est engendrée utilisant les valeurs de crête pour les impulsions détectées, onde carrée qui correspond à la variable à mesurer.

8. Un procédé selon la revendication 7, comprenant une amplification des impulsions détectées pendant chaque impulsion de courant élevé, à faible taux de travail en utilisant un amplificateur de forte puissance et forte largeur de bande (U1) et, à tous les autres instants, l'amplification de l'impulsion détectée en utilisant un amplificateur (U1) à faible puissance à faible largeur de bande.

FIG. IA

FIG. IB

FIG. 2

EP 0 165 697 B1

## FIG. 3

SAMPLE AND HOLD OUTPUT
(PEAK FOLLOWER)

PREAMP
OUTPUT

RESET

## FIG. 4

INPUT
AND
OUTPUT

OUTPUT

OUTPUT

INPUT

## FIG. 5

POSITIVE
SATURATION

MODULATION

AVERAGE PEAK
CLAMP LEVEL
(SIGNAL GROUND)

NEGATIVE
SATURATION

DETECTOR
CURRENT

3